# EUROPÄISCHE PATENTANMELDUNG

(11) **EP 3 301 039 A1**
(43) Veröffentlichungstag der Anmeldung: **04.04.2018**
(21) Anmeldenummer: 16020498.8
(22) Anmeldetag: 15.12.2016
(51) Int. Cl.: B65D 81/20, B65B 31/04

(54) **VERFAHREN ZUR VERARBEITUNG VON METALLPULVER**

(30) Priorität: 29.09.2016 DE 102016011705
(71) Anmelder: Linde Aktiengesellschaft, 80331 München (DE)
(72) Erfinder: Scholz, Jürgen, 81379 München (DE); Miklos, Ernst, 85551 Kirchheim (DE); Fieret, Jim, Orpington, BR6 8DT (GB); Foret, Pierre, 80796 München (DE)
(74) Vertreter: Gellner, Bernd

(57) **Zusammenfassung**

Verfahren zum Verarbeiten von pulverförmigen Ausgangsprodukten für insbesondere generative Fertigungsverfahren, wobei ein pulverförmiger Werkstoff erzeugt wird und unter Schutzgasatmosphäre verpackt wird, wobei in der Verpackung ebenfalls Schutzgas vorhanden ist und das verpackte pulverförmige Material bei einem Verwender entpackt und einer Weiterverarbeitung zugeführt wird, dadurch gekennzeichnet, dass dem Schutzgas während der Verpackung und/oder in der Verpackung ein mit Sensoren erfassbares Gas zugeführt wird oder das Schutzgas ein mit Sensoren erfassbares Gas ist und beim Hersteller und Verpacker des pulverförmigen Materials und/oder beim Endanwender die Verpackung mit Sensoren auf das Ausströmen des mit Sensoren ermittelbaren Gases untersucht wird.

## Beschreibung

Die vorliegende Erfindung betrifft ein Verfahren zum Verarbeiten von Metallpulver, insbesondere bei der Weiterverarbeitung in pulvermetallurgischen oder generativen Herstellungsverfahren

Es gibt zahlreiche Verfahren, um Metallpulver herzustellen. Dazu gehören das mechanische Zerkleinern von festem Metall, das Ausscheiden aus Salzlösungen, die thermische Zersetzung einer chemischen Verbindung, die Reduktion einer chemischen Verbindung, meist des Oxides in fester Phase, das elektrolytische Abscheiden und die Verdüsung von flüssigem Metall. Die drei letztgenannten Verfahren werden in der Praxis am häufigsten zur Herstellung von Metallpulver verwendet.

Bei der Verdüsung wird geschmolzenes Metall in kleine Tröpfchen zerteilt und rasch erstarrt, bevor die Schmelzetröpfchen in Kontakt miteinander oder mit einer festen Oberfläche kommen. Das Prinzip dieses Verfahrens beruht auf der Zerteilung eines dünnen, flüssigen Metallstrahls durch einen mit hoher Geschwindigkeit auftreffenden Gas- oder Flüssigkeitsstrom. Luft, Stickstoff und Argon sind die meistgenutzten Gase, als Flüssigkeit wird vor allem Wasser eingesetzt.

Auch andere Verfahren zur Schmelzezerteilung finden zunehmend Anwendung, wie z.B. die Zentrifugalverdüsung, bei der Schmelzetröpfchen von einer rotierenden Quelle weggeschleudert werden.

Während die Wasserverdüsung insbesondere für die Herstellung von Pulvern aus Eisen, Stahl, Kupfer und Kupferlegierungen eingesetzt wird erfolgt die Verdüsung von Aluminium und Zink überwiegend, die von Kupfer teilweise unter Luft.

Für die Druckluftverdüsung wird zunächst eine Schmelze des zu verdüsenden Metalls oder der zu verdüsenden Legierung aufgebaut und entsprechend überhitzt. Diese überhitzte Schmelze läuft meist über einen zweiten kleineren Tiegel oder einen Eingießtrichter und bildet dort einen Schmelzestrahl aus, der senkrecht durch eine Düsenkonstruktion fällt. Der Schmelzestrahl wird durch ein Gas (Trägergas) zerstäubt und die entstehenden Tröpfchen erstarren in einer Verdüsungskammer in der Bewegung. In der Verdüsungskammer und/oder in nachgeschalteten Gasreinigungsanleitung (Zyklone, Filter) wird das Metallpulver vom Trägergas getrennt.

Bei der industriellen Stahlpulvergewinnung durch Wasserverdüsung werden bevorzugt niedriggekohlte, im LD-Verfahren hergestellte, Stahlschmelzen verwendet. Eine weitere Möglichkeit zur Stahlpulvergewinnung besteht darin, sortierten Schrott zu verwenden und diesen in einem Lichtbogenofen zu schmelzen.

Hochreine Pulver aus Sonderstahl, Superlegierungen und anderen hochlegierten bzw. oxidationsempfindlichen Werkstoffen lassen sich vorteilhaft durch Verdüsung mit Inertgas herstellen. Dieses Verfahren liefert meist kugelförmige Pulver, die für das konventionelle mechanische Pressen von Formteilen kaum, für eine Verarbeitung durch isostatisches Pressen und Pulverspritzgießen hervorragend geeignet sind.

Großtechnisch wird häufig das ASEA-STORA-Verfahren zur Verdüsung von Schnellarbeitsstahlschmelzen angewendet. Durch Verwendung von gereinigtem Inertgas, wie z.B. N₂ und Ar, und Arbeiten in einer geschlossenen Anlage lassen sich Pulver mit in etwa 100 ppm Sauerstoff erzeugen. Zur Erhöhung der Abkühlgeschwindigkeit der Metalltröpfchen wird die Verdüsungskammer von außen gekühlt und für das Sammeln der Pulver ein wassergekühlter Boden verwendet.

Ein anderes Verfahren umfasst die Verdüsung mit Gasen in einer Laval-Düse nach NANOVAL. Für die Erzeugung reiner kugeliger Metallpulver aus reaktiven Metallen wie Titan oder Zirkonium sind Verfahren vorteilhaft, die den Kontakt des schmelzflüssigen Metalls mit keramischem Tiegelmaterial nicht zulassen, da dies zu einer Oxidation der Schmelze und möglicherweise zur Zerstörung des Tiegels führen könnte. Daher erschmilzt man das reaktive Metall induktiv oder mittels Plasma in einem gekühlten Kupfertiegel. Zwischen Kupfertiegel und Schmelze bildet sich eine dünne erstarrte Schicht des zu verdüsenden Metalls, welche eine Reaktion der Schmelze mit dem Tiegelmaterial wirkungsvoll verhindert.

Eine andere Möglichkeit der keramikfreien Metallverdüsung, die sich besonders für reaktive Werkstoffe eignet und z. B. in der Herstellung von Titanpulver Verwendung findet, stellt das EIGA-Verfahren dar. Bei diesem Verfahren wird das zu verdüsende Metall bzw. die zu verdüsende Legierung als Elektrode in Stangenform senkrecht einer ringförmigen Induktionsspule zugeführt und hier oberflächlich aufgeschmolzen. Um ein gleichförmiges Anschmelzen zu gewährleisten, unterliegt die Stange während des Verfahrens einer Drehbewegung. Die so erzeugte Schmelze tropft schließlich im freien Fall durch eine Ringdüse, wird hier zerstäubt und erstarrt. Anschließend wird das Pulver in einen Verdüsungsbehälter abgeschieden.

Ebenfalls für die Herstellung reiner sphärischer Titan- und Titan-Legierungspulver wird die Plasma-Verdüsung verwendet. Ein aus der zu verdüsenden Legierung gefertigter Draht von ca. 3 mm Durchmesser wird einer Anordnung von drei Plasmabrennern zugeführt, wo er in einem Schritt geschmolzen und zerstäubt wird. Durch die Reinheit des Ausgangsmaterials, das Fehlen jeglichen Tiegelmaterials und das Schmelzen unter inerter Atmosphäre erhält man ein Endprodukt höchster Reinheit.

Eine Zerteilung von Schmelzen unter Vakuum, die man vom Prinzip her auch der Verdüsung zuordnen muss, ist mit Hilfe von Edelgasen oder Wasserstoff möglich. Die unter Druck mit dem Gas angereicherte Schmelze wird in dünnem Strahl in eine evakuierte Kammer gedrückt. Die Expansion des in der Schmelze gelösten Gases zerteilt diese in feine Tröpfchen.

Häufig werden Metallpulver nach der Herstellung einer Glühbehandlung unterworfen. Eine Reduktion der Pulver ist z.B. notwendig, wenn in Folge längerer oder ungünstiger Lagerung (erhöhte Feuchtigkeit und Temperatur) die Pulverteilchen mehr oder weniger oberflächlich oxidiert sind. Die Reduktion wird in herkömmlichen, auch für das Sintern genutzten Öfen vorgenommen. Am häufigsten werden als Reduktionsatmosphäre reiner Wasserstoff und Ammoniakspaltgas verwendet.

Bei den bekannten Verfahren zur Verarbeitung von Metallpulvern, insbesondere bei generativen Fertigungsverfahren bzw. dem so genannten "additive manufacturing (am)" ist es notwendig, dass die Metallpulver eine möglichst reaktive Oberfläche haben und insbesondere keine oberflächliche Oxidation der Metallpulver stattfindet.

Eines der Verfahren im Rahmen des additive manufacturing ist im Allgemeinen die Pulverbett-Technology. Hierbei wird das Pulver innerhalb einer Kammer angeordnet, wobei die Kammer mit einem Schutzgas gespült wird, wobei ein Laser auf das Pulver dieses einschmelzend oder sinternd einwirkt und hieraus ein Bauteil fertigt, dem Lageauf-Lage entsprechend laserbehandelt wird.

Insgesamt bekannt sind das selektive Laserschmelzen (SLM), das selektive Lasersintern (SLS), das selective heat sintering (SHS) und das Elektronstrahlschmelzen (EBM). Das Elektronstrahlschmelzen, das selektive Lasersintern und das selektive Laserschmelzen sind ähnliche Verfahren, wobei beim selektiven Laserschmelzen das Metallpulver in einer dünnen Schicht auf einer Grundplatte aufgebracht wird und mittels Laserstrahl vollständig umgeschmolzen wird, so dass es eine feste Materialschicht bildet. Anschließend wird die Grundplatte um den Betrag einer Schichtdicke abgesenkt und ein Metallpulver aufgetragen, wobei sich der Zyklus solange wiederholt, bis alle Schichten in gewünschter Weise umgeschmolzen sind.

Beim Lasersintern wird das Werkstück ebenfalls Schicht für Schicht aufgebaut, wobei das Pulver auf einer Bauplattform vollflächig aufgebracht wird, wobei dann die jeweiligen Teile der Schicht mit dem Laserstrahl bearbeitet werden, die später das Bauteil ausbilden sollen.

Beim Elektronstrahlschmelzen werden diese Schritte sinngemäß durch einen Elektronenstrahl anstelle eines Laserstrahls durchgeführt.

Neben den generativen Fertigungsverfahren gibt es andere Herstellungsverfahren, bei denen Metallpulver eingesetzt werden. Hier sind insbesondere das Heiß-isostatische-Pressen (HIP), Sintern, thermisches Spritzen, Plasmaspritzen und weitere zu nennen.

All diesen Verfahren ist gemeinsam, dass sie relativ empfindlich für die umgebende Atmosphäre sind und insbesondere empfindlich auf Verunreinigungen in der Atmosphäre, insbesondere Sauerstoff sind.

Bei vielen dieser Verfahren wird deshalb unter einer Schutzgasatmosphäre gearbeitet.

Aufgabe der Erfindung ist es, ein Verfahren zu schaffen, mit dem derartige Metallpulver in höherer Qualität erzielt und verarbeitet werden können.

Die Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Erfindungsgemäß wurde erkannt, dass zwar die Herstellungsverfahren häufig unter einer Schutzgasatmosphäre ablaufen, jedoch die Lieferkette bei der Verarbeitung dieser Pulver bislang vernachlässigt wurde.

Der Lieferkette kommt aber eine besondere Bedeutung zu, denn sie umfasst nicht nur den Transport der Pulver, sondern auch die Verpackung der Pulver, die Lagerung der Pulver und die Entpackung und Weiterverarbeitung der Pulver.

Je nach Verarbeitungs- und Liefergeschwindigkeit befinden sich derartige Metallpulver somit häufig erheblich länger in der Lieferkette als in der Herstellung oder der Verarbeitung. Verunreinigungen dieser Pulver und insbesondere Beeinträchtigungen an der Oberfläche der Pulver können somit während der Lieferkette bzw. in der Lieferkette in besonderer Weise auftreten.

Bei diesen Technologien ist bekanntermaßen die Pulverqualität, aber eben nicht nur die Qualität der Legierungen selber oder die Korngrößenverteilung, sondern ebenfalls die Oberflächengüte der Pulverpartikel ein entscheidender Faktor zur Herstellung eines hochqualitativen Produkts.

Insbesondere konnte beobachtet werden, dass relativ große Schwankungen von Charge zu Charge auftreten können, wobei Qualitätsschwankungen sowohl des Metallpulvers, als auch des Zwischenprodukts, als auch des metallischen Bauteils, also des Endprodukts, im Fall fehlender Qualität zu Beanstandungen seitens des Verarbeiters oder Endkunden führen können.

Es liegt also im vitalen Interesse der Pulverhersteller, die Pulverqualität nachhaltig und nachweisbar bis zum Ort der Verarbeitung zu sichern und diese Qualität auch nachweisen zu können.

Hierzu ist es notwendig, solche standardisierten Qualitätsabläufe auch dokumentieren zu können. Bislang waren für solche Qualitätssicherungsmaßnahmen häufig chemische Analysen notwendig, die gegebenenfalls Verunreinigungen oder Verschlechterungen der Qualität des Pulvers während der Lieferkette nachweisen konnten.

Bislang wurden bereits Vakuumverpackungen eingesetzt, wobei der Verwender hierbei feststellen kann, ob das Vakuum vorhanden ist oder nicht. Zudem wurden Argon-Schutzgasfüllungen in solchen Verpackungen vorgesehen, wobei die Verpackung zwar unbeschädigt aussehen kann, tatsächlich aber durch Lecks gar kein Argon mehr in der Verpackung enthalten sein kann.

Die Erfinder haben erkannt, dass sowohl die Verpackung unter Vakuum als auch die Argon-Verpackung Nachteile haben. Die Verpackung unter Vakuum kann bei leichter Beschädigung zwar das Vakuum verlieren, eine Unterdruckverpackung ist jedoch immer ein potenzielles Risiko für eintretenden Sauerstoff, wobei dann nicht mehr festgestellt werden kann, wann die Verpackung beschädigt wurde.

Erfindungsgemäß können Wasserstoff oder Helium der Verpackungsatmosphäre, die beispielsweise aus Argon oder Stickstoff oder Mischungen hieraus besteht, beigefügt werden. Bei der Verwendung von Wasserstoff muss selbstverständlich der Zusatz unterhalb möglicher Explosionsgrenzen liegen, was üblicherweise dann gegeben ist, wenn der Wasserstoffgehalt kleiner 4%, gemessen an der Gesamtatmosphäre, ist.

Zusätzlich kann Wasserstoff nicht bei Stahlpulvern eingesetzt werden, da jegliche Stahlsorten zur Wasserstoffversprödung neigen und den Wasserstoff besonders gut einbauen, jedoch wieder abgeben, jedoch meistens dann, wenn es nicht erwünscht ist.

Der Vorteil von Wasserstoff oder Helium ist, dass diese als Leckanzeiger verwendet werden können, wobei ihre molekulare Größe von Vorteil ist, die die Ermittlung von kleinen Leckagen viel früher ermöglicht als die Messung oder Feststellung eines Druckverlustes bei Argon oder Stickstoff. Erfindungsgemäß sind sogenannte Schnüffelsensoren vorhanden, welche auch geringste Mengen an austretendem Wasserstoff oder Helium ermitteln können, was es dem Bediener ermöglicht, die defekte Verpackung mit dem möglicherweise beeinträchtigten Metallpulver nicht in die Produktion gelangen zu lassen.

Zusätzlich ist es möglich, sogar die Leckagerate des Wasserstoffs oder des Heliums zu ermitteln und für jede Verpackung zu notieren.

Die Schnüffelsensoren können dabei sowohl herstellerseitig zur Ermittlung der ausreichenden Dichtigkeit einer Verpackung oder abnehmerseitig zur Ermittlung möglicher Lecks eingesetzt werden. Vorteilhafterweise werden hierdurch Ausfallzeiten aufgrund von qualitativ schlechtem Zwischenprodukt vermieden.

Zusätzlich können bei diesen Verpackungen mit Helium oder Wasserstoff die Verpackungsatmosphäre unter Druck in die Verpackung eingebracht werden. Vor dem Öffnen einer solchen Verpackung muss dann entweder ein Ventil betätigt werden, welches für den Endanwender deutlich spürbar den Überdruck uns Freie entlässt, was auf eine unbeschädigte Verpackung schließen lässt, oder ein Verpackungsteil, wie zum Beispiel ein Deckel, wird durch den Überdruck so vorgespannt, dass durch Tasten dieses Bereichs festgestellt werden kann, ob ein Überdruck noch vorhanden ist oder nicht. Hierbei ist insbesondere von Vorteil, dass auch kleinste Leckagen durch den Überdruck und das ausströmende "Kennzeichnungsgas" Wasserstoff oder Helium besonders deutlich angezeigt werden.

Das erfindungsgemäße Verfahren umfasst somit den Schritt des Verpackens von metallischen aber auch nichtmetallischen, wie zum Beispiel keramischen oder Kunststoffpulvern, insbesondere für generative Fertigungsverfahren in einer Schutzgasatmosphäre unter Verwendung eines Gases, welches Wasserstoff und/oder Helium zur Ermittlung von Packungsleckagen umfasst.

Zudem umfasst das Verfahren möglicherweise einen Schritt, bei dem herstellerseitig eine Qualitätskontrolle der Verpackungsgüte dadurch durchgeführt wird, dass die Verpackung auf austretendes Wasserstoff- oder Heliumgas bzw. "Kennzeichnungsgas" mit Sensoren überwacht wird und/oder

einen Verfahrensschritt, bei dem ankommende Verpackungen beim Verarbeiter ebenfalls mit Sensoren auf Lecks überprüft werden und/oder
dass in beiden Fällen eine Leckagerate ermittelt wird, für den Fall, dass gewisse Verpackungen unvermeidlich geringste Leckagen aufweisen.

Erfindungsgemäß können als Schutzgas bis zu 4% Wasserstoff oder Helium in einem Schutzgas, welches Argon, Stickstoff oder Mischungen hieraus enthält, verwendet werden.

Bei der Verwendung von Helium ist es möglich, auch reines Helium zu verwenden, insbesondere aber Gasmischungen, die 5 bis 100% Helium umfassen.

Besonders bevorzugt ist es bei der Erfindung, wenn Hersteller und Anwender die gleichen Ermittlungsmethoden verwenden und insbesondere gleiche Messvorrichtungen verwenden, die die verwendeten Kennzeichnungsgase ermitteln und gegebenenfalls sogar die Leckagerate dieser Gase ermitteln.

Weiter bevorzugt ist es, wenn der Hersteller und der Abnehmer so vernetzt sind, dass die Messgeräte so vernetzt sind, dass gegebenenfalls Unterschiede festgestellt werden können und nicht nur nominale Werte, sondern auch Vergleichswerte ermittelt werden können. Insbesondere bei Vergleichswerten kann dann bei Abweichungen ein Fehlersignal ausgegeben werden.

Die Erfindung umfasst zudem eine Gasmischung zur Leckerkennung von Packungen eines metallischen Pulvers für das generative Fertigungsverfahren, wobei die Gasmischung 1 bis 4 % Wasserstoff und/oder 5 bis 100 % Helium Rest Stickstoff und/oder Argon enthält.

Erfindungsgemäß kann die Gasmischung fertig gemischt in entsprechenden Behältnissen oder vor dem Verpacken aus zwei oder mehr Komponenten am Ort der Verpackung des Metallpulvers gemischt werden und anschließend unter dieser Atmosphäre verpackt und/oder das Gas in die Verpackung gefüllt werden.

Die Erfindung umfasst zudem ein gasdichtes Behältnis zum Befördern einer Gasmischung und/oder des Metallpulvers, wobei das Behältnis fest oder flexibel ist und eine Atmosphäre nach Anspruch 7 oder 8 enthält.

Die Erfindung betrifft darüber hinaus ein Verfahren zur Qualitätssicherung bei der Verpackung, dem Versand und dem Entpacken von metallischen Pulvern, insbesondere Metallpulvern für die generative Fertigung, basierend auf differenzieller Leckageermittlung in der Verpackungsstation des Herstellers und/oder Händlers und/oder Empfängers/Benutzers, wobei die Gasatmosphäre, mit der das Metallpulver verpackt ist, sensorisch erfassbar ist und die Leckageermittlungsdaten verglichen werden, wobei das Pulver unter einer Gasatmosphäre verpackt wird, die eine definierte Zusammensetzung hat und ggf. nach der Verpackung eine Gasleckage gemessen wird, eine Losnummer des verpackten Metalls und der Verpackung eine die Zusammensetzung des Gases, das Ergebnis der Leckageermittlung beim Verpacker gespeichert und digital in einer Cloud abgelegt wird, wobei der Empfänger der Verpackung die gleiche Leckageermittlungsausrüstung verwendet und seine Messung von Gasleckagen mit den Daten in der Cloud vergleicht.

Dieses erfindungsgemäße Verfahren kann dadurch weitergebildet sein, dass zur Vereinfachung des Vergleichs Leckageermittlungsgerätschaften verwendet werden, die in der Lage sind, die Daten direkt in die Cloud oder zu einem mobilen Datenübertragungsgerät zu übertragen, welches mit der Cloud kommuniziert.

## Patentansprüche

1. Verfahren zum Verarbeiten von pulverförmigen Ausgangsprodukten für insbesondere generative Fertigungsverfahren, wobei ein pulverförmiger Werkstoff erzeugt wird und unter Schutzgasatmosphäre verpackt wird, wobei in der Verpackung ebenfalls Schutzgas vorhanden ist und das verpackte pulverförmige Material bei einem Verwender entpackt und einer Weiterverarbeitung zugeführt wird, **dadurch gekennzeichnet, dass** dem Schutzgas während der Verpackung und/oder in der Verpackung ein mit Sensoren erfassbares Gas zugeführt wird oder das Schutzgas ein mit Sensoren erfassbares Gas ist und beim Hersteller und Verpacker des pulverförmigen Materials und/oder beim Endanwender die Verpackung mit Sensoren auf das Ausströmen des mit Sensoren ermittelbaren Gases untersucht wird.

2. Verfahren nach Anspruch 1, **dadurch gekennzeichnet, dass** die Verpackung unter Schutzgas mit dem durch Sensoren erfassbaren Gas derart stattfindet, dass in der Verpackung ein Unterdruck, atmosphärischer Druck oder ein Überdruck herrscht.

3. Verfahren nach einem der vorhergehenden Ansprüche, **dadurch gekennzeichnet, dass** als durch Sensoren ermittelbares Gas Wasserstoff (H2) oder Helium (He) verwendet wird.

4. Verfahren nach einem der vorhergehenden Ansprüche, **dadurch gekennzeichnet, dass** bis zu 4% Wasserstoff und bis zu 100% Helium verwendet werden.

5. Verfahren nach einem der vorhergehenden Ansprüche,
**dadurch gekennzeichnet, dass** an der Verpackung innen- oder außendrucksensitive Bereiche derart vorgesehen werden, dass ein in der Verpackung bestehender Unterdruck oder Überdruck haptisch oder optisch erfassbar ist.

6. Verfahren nach einem der vorhergehenden Ansprüche, **dadurch gekennzeichnet, dass** nach dem Verpacken beim Hersteller und/der vor dem Entpacken beim Anwender die Verpackung mit Schnüffelsensoren auf ausströmendes, mit Sensoren erfassbares Gas getestet wird und/oder die Menge des ausströmenden, für Sensoren erfassbaren Gases, ermittelt wird und die Werte der Messungen miteinander verglichen werden.

7. Gasmischung zur Leckerkennung von Packungen eines metallischen Pulvers für das generative Fertigungsverfahren, insbesondere Gasmischung zur Erkennung in einem Verfahren nach einem der vorhergehenden Ansprüche, **dadurch gekennzeichnet, dass** die Gasmischung 1 bis 4 % Wasserstoff und/oder 5 bis 100 % Helium Rest Stickstoff und/oder Argon enthält.

8. Gasmischung nach Anspruch 7, **dadurch gekennzeichnet, dass** das Gas fertig gemischt in entsprechenden Behältnissen oder vor dem Verpacken aus zwei oder mehr Komponenten am Ort der Verpackung des Metallpulvers gemischt wird und anschließend unter dieser Atmosphäre verpackt und/oder das Gas in die Verpackung gefüllt wird.

9. Gasdichtes Behältnis, insbesondere gasdichtes Behältnis zum Befördern einer Gasmischung nach Anspruch 7 oder 8 zur Verwendung in einem Verfahren nach einem der Ansprüche 1 bis 6, **dadurch gekennzeichnet, dass** das Behältnis fest oder flexibel ist und eine Atmosphäre nach Anspruch 7 oder 8 enthält.

10. Verfahren zur Qualitätssicherung bei der Verpackung, dem Versand und dem Entpacken von metallischen Pulvern, insbesondere Metallpulvern für die generative Fertigung, basierend auf differenzieller Leckageermittlung in der Verpackungsstation des Herstellers und/oder Händlers und/oder Empfängers/Benutzers, **dadurch gekennzeichnet, dass** die Gasatmosphäre, mit der das Metallpulver verpackt ist, sensorisch erfassbar ist und die Leckageermittlungsdaten verglichen werden, wobei das Pulver unter einer Gasatmosphäre verpackt wird, die eine definierte Zusammensetzung hat und ggf. nach der Verpackung eine Gasleckage gemessen wird, eine Losnummer des verpackten Metalls und der Verpackung eine die Zusammensetzung des Gases, das Ergebnis der Leckageermittlung beim Verpacker gespeichert und digital in einer Cloud abgelegt wird, wobei der Empfänger der Verpackung die gleiche Leckageermittlungsausrüstung verwendet und seine Messung von Gasleckagen mit den Daten in der Cloud vergleicht.

11. Verfahren nach Anspruch 10, **dadurch gekennzeichnet, dass** zur Vereinfachung des Vergleichs Leckageermittlungsgerätschaften verwendet werden, die in der Lage sind, die Daten direkt in die Cloud oder zu einem mobilen Datenübertragungsgerät zu übertragen, welches mit der Cloud kommuniziert.
